# EUROPEAN PATENT APPLICATION

(11) **EP 4 442 720 A1**
(43) Date of publication of application: **09.10.2024**
(21) Application number: 22901646.4
(22) Date of filing: 21.11.2022
(51) Int. Cl.: C08F 220/34, C08F 220/06, C08F 2/30, C09D 133/14, C09D 5/14

(54) **METHOD FOR PREPARING ACRYLIC EMULSION RESIN COMPOSITION HAVING ANTIVIRAL AND ANTIBACTERIAL EFFECTS AND ACRYLIC EMULSION RESIN COMPOSITION PREPARED THEREBY**

(30) Priority: 30.11.2021 KR 20210167809
(71) Applicant: POSCO Co., Ltd, Pohang-si, Gyeongsangbuk-do 37859 (KR)
(72) Inventor: PARK, Ji-Hoon, Gwangyang-si, Jeollanam-do 57807 (KR)
(74) Representative: Meissner Bolte Partnerschaft mbB
(86) International application number: PCT/KR2022/018392
(87) International publication number: WO 2023/101288

(57) **Abstract**

The present invention relates to a method for preparing an acrylic emulsion resin composition having antiviral and antibacterial effects and, in particular, to a preparation method in which an acrylic emulsion resin is prepared by polymerizing a monomer mixture including a vinyl monomer containing a quaternary ammonium functional group, which is widely used due to having excellent antiviral and antibacterial effects. Also, the present invention relates to an acrylic emulsion resin composition having antiviral and antibacterial effects, the acrylic emulsion resin composition comprising a polymer of a monomer mixture including a vinyl monomer containing a quaternary ammonium salt group.

## Description

### Technical Field

The present disclosure relates to a method for preparing an acrylic emulsion resin composition having antiviral and antibacterial effects and, in particular, to a preparation method in which an acrylic emulsion resin is prepared by polymerizing a monomer mixture including the monomer by using a vinyl monomer containing a quaternary ammonium functional group, which is widely used due to having excellent antiviral and antibacterial effects.

In addition, the present disclosure relates to an acrylic emulsion resin composition having antiviral and antibacterial effects, the acrylic emulsion resin composition including a polymer of a monomer mixture including a vinyl monomer containing a quaternary ammonium salt group.

### Background Art

Virus attacks on humans are continuously occurring, the cycle is becoming more frequent, and the degree of damage is also worsening. Viral infections include direct infection through droplets, or the like, and indirect infection via objects. In addition to direct infection through droplets, air, and the like, the risk of indirect infection has also been proven through several infection cases.

After the Covid-19 Pandemic that occurred in 2020, imparting antiviral and antibacterial properties to household materials to prevent viral infections has become an essential element for human survival. Coating of functional materials, which is most commonly performed to impart antiviral and antibacterial properties, is performed by mixing metal and metal oxide particles having antiviral and antibacterial properties into a commonly used coating resin.

Currently, Cu, Ag, TiO₂, ZnO, CuO, CuO₂, and the like are used as metal and metal oxide particles having antiviral and antibacterial effects. Korean Patent No. 10-2262892 discloses a paint composition having antiviral properties including a functional additive which is a mixture of zinc and zeolite.

However, in this method, since metal particles are included in a coating composition, when surfaces of various materials are coated, there is a problem that the aesthetic design of the existing material is damaged due to the inherent color of the metal particles and causes inconvenience in use. In addition, when manufacturing the coating composition, it is difficult to disperse heavy metal particles and metal oxide particles when the heavy metal particles and metal oxide particles are mixed in the coating solution, and it is difficult to distribute the same externally of the surface layer after coating, so that it is difficult to implement antiviral and antibacterial effects.

In addition, a technology utilizing metal and metal oxides is commonly based on the principle of consumptive oxidation of metals or utilize a photocatalytic effect, so there are limitations in realizing performance and sustainability thereof is also lacking. Furthermore, metal and metal oxide particles having antiviral and antibacterial properties are relatively expensive noble metals and noble metal oxides, which are non-economical.

In addition to the technology utilizing metal and metal oxides, there is a method of including sterilizing chemicals with antiviral and antibacterial effects in the coating layer, but the application of the method is limited, because the chemicals are eluted during the production process or during product use, causing the effects to disappear quickly or the eluted chemicals may be harmful, such as being able to be absorbed into the human body.

Therefore, in order to avoid such negative effects, there is a need to develop a resin that can be used in the coating composition having excellent antiviral properties.

### Summary of Invention

### Technical Problem

The purpose of the present disclosure is to solve the problems of the prior art, and an aspect of the present disclosure is to provide a method for preparing an acrylic emulsion resin composition having excellent antiviral and antibacterial effects without including metal, metal oxide particles, or chemicals in the resin composition, and an acrylic emulsion resin composition resulting therefrom.

### Solution to Problem

According to an aspect of the present disclosure, provided is a method for preparing an acrylic emulsion resin composition having excellent antiviral and antibacterial effects, the method including: preparing a monomer mixture including a vinyl monomer containing a quaternary ammonium salt group; preparing an addition polymerization mixture by mixing a nonionic surfactant and a radical polymerization initiator; and an emulsion polymerization reaction operation of performing a polymerization reaction by mixing the monomer mixture with the prepared addition polymerization mixture.

According to another aspect of the present disclosure, provided is an acrylic emulsion resin composition having antiviral and antibacterial effects, the acrylic emulsion resin composition including a polymer of a monomer mixture including a vinyl monomer containing a quaternary ammonium salt group.

### Advantageous Effects of Invention

As set forth above, according to an aspect of the present disclosure, since the resin composition according to the method for preparing an acrylic emulsion resin composition of the present disclosure itself has antiviral and antibacterial properties, the resin composition may have excellent antiviral and antibacterial effects capable of killing viruses or bacteria upon contact without mixing the same with separate metal particles, metal oxide particles, or sterilizing chemicals. In addition, the acrylic emulsion resin composition may be used to prepare a water-based paint, and the paint may also have excellent antiviral and antibacterial effects.

### Best Mode for Invention

Hereinafter, preferred embodiments of the present disclosure will be described. However, the following embodiments of the present disclosure may be modified to have various other forms, and the scope of the present disclosure is not limited thereto.

The present disclosure relates to a method for preparing an acrylic emulsion resin composition having excellent antiviral and antibacterial effects, the method including: preparing a monomer mixture including a vinyl monomer containing a quaternary ammonium salt group; preparing an addition polymerization mixture by mixing a nonionic surfactant and a radical polymerization initiator; and an emulsion polymerization reaction operation of performing a polymerization reaction by mixing the monomer mixture with the prepared addition polymerization mixture.

Since the acrylic emulsion resin composition obtained by the above-described manufacturing method itself has antiviral and antibacterial effects, the acrylic emulsion resin composition may have excellent antiviral and antibacterial effects capable of killing viruses or bacteria upon contact without mixing the same with separate metal particles, metal oxide particles, or sterilizing chemicals.

The operation of preparing a monomer mixture including a vinyl monomer containing a quaternary ammonium salt group may be performed by providing a single vinyl monomer containing a quaternary ammonium salt group or two or more monomer mixtures including other monomers in addition to the monomer, wherein the monomer may be mixed with distilled water.

The vinyl monomer containing the quaternary ammonium salt group may be used without limitation, as long as it has an ammonium ion capable of ion exchange reaction on one side and a vinyl group capable of radical polymerization on the other side, and for example, as the vinyl monomer, [2-(methacryloyloxy)ethyl]trimethylammonium, [3-(methacryloylamino)propyl]trimethylammonium, and [2-(acryloyloxy)ethyl]trimethylammonium may be used.

As the other monomers, at least one selected from the group consisting of acrylic acid ester-based monomer, aromatic vinyl-based monomer, and organic acid-based monomer may be used.

As the acrylic acid ester-based monomers, at least one selected from the group consisting of methyl methacrylate, methyl acrylate, ethyl (meth)acrylate, ethyl acrylate, butyl acrylate, butyl (meth)acrylate, 2-ethylhexyl (meth)acrylate, 2-ethylhexyl acrylate, benzyl (meth)acrylate, benzyl acrylate, lauryl (meth)acrylate, lauryl acrylate, oleyl (meth)acrylate, palmityl (meth)acrylate, and stearyl (meth)acrylate may be used.

As the aromatic vinyl-based monomer, at least one selected from the group consisting of styrene, α-methylstyrene, trans-β-methylstyrene, β-methylstyrene, and 4-methylstyrene may be used.

As the organic acid-based monomer, at least one selected from the group consisting of acrylic acid, methacrylic acid, fumaric acid, maleic acid, and itaconic acid may be used.

The monomer mixture preferably includes 0.1 to 50% by weight, and more preferably includes 2 to 10% by weight, of the vinyl monomer containing the quaternary ammonium salt group based on a total weight of an entire monomer mixture. If the content thereof is less than 0.1% by weight, there is no effect, and if the content thereof is more than 50% by weight, there may be a problem of poor physical properties such as adhesion, water resistance, and the like, when the resin is used as a paint composition.

In addition, since the monomer mixture is not easily dispersed in distilled water, a nonionic surfactant may be additionally included to control viscosity of the mixture and disperse the same more uniformly. The distilled water is preferably mixed in an amount of 20 to 50% by weight based on the total weight of the monomer mixture, and the nonionic surfactant is preferably mixed in an amount of 1 to 3% by weight.

Next, the operation of preparing an addition polymerization mixture of the present disclosure may be performed by mixing a nonionic surfactant and a radical polymerization initiator.

As the nonionic surfactant, at least one selected from the group consisting of polyoxyethylene nonylphenyl ether, polyoxyethylene octylphenyl ether, polyoxyethylene alkyl ether, polyoxyethylene alkyl ester, polyoxyethylene alkylamine ether, polyoxyethylenepolyoxypropylene, polyethylene glycol, and sorbitol fatty acid ester may be used.

When an anionic surfactant such as sodium dodecylbenzenesulfonate is used rather than a nonionic surfactant, synthesis stability is destroyed by reaction with a quaternary ammonium vinyl monomer, making polymerization difficult.

The radical polymerization initiator may be at least one selected from the group consisting of ammonium persulfate, sodium persulfate, and potassium persulfate.

The addition polymerization mixture may be prepared by mixing 1 to 20 parts by weight of a nonionic surfactant and 0.1 to 3 parts by weight of a radical polymerization initiator based on 100 parts by weight of the monomer mixture.

If the nonionic surfactant is less than 1 part by weight, the particles may be unstable and precipitation thereof may occur, and if the nonionic surfactant exceeds 20 parts by weight, a problem of poor workability may occur when used in a coating composition due to an increase in viscosity.

If the radical polymerization initiator is less than 0.1 parts by weight or exceeds 3 parts by weight, there is a problem of poor reactivity considering a molecular weight size.

Furthermore, the operation of preparing the addition polymerization mixture may be performed by additionally mixing at least a portion of the monomer mixture, and preferably, may be performed by mixing about 5% by weight of the monomer mixture based on the total weight of the monomer mixture.

In addition, the addition polymerization mixture may be mixed in a buffer solution to have a pH similar to that of the monomer mixture.

The emulsion polymerization reaction operation of the present disclosure is performed by performing a polymerization reaction by mixing the monomer mixture with the addition polymerization mixture prepared above. For example, the operation may be performed by dropping the monomer mixture into the addition polymerization mixture.

Meanwhile, the method for preparing an acrylic emulsion resin composition of the present disclosure may further include a pH adjustment operation of adding a pH adjuster to the result of the emulsion polymerization reaction operation, wherein the pH adjuster may be at least one selected from the group consisting of ammonia water, monoethanolamine, diethanolamine, triethanolamine, 1-amino-2-methylpropane, 2-amino-2-methylpropane, and triethylamine, it is more preferable to use 2-amino-2-methylpropane as the pH adjuster.

The pH adjustment operation may be performed to adjust a pH of the result of the emulsion polymerization reaction operation to 6 to 9. When the pH is adjusted to less than 6, there is a problem in that the viscosity increases and compatibility with a thickener decreases when the acrylic emulsion resin composition is prepared and stored, and when the pH is adjusted to exceed 9, there is a problem in that compatibility with cationic antibacterial agents is reduced when the acrylic emulsion resin composition is stored.

The pH adjuster may be added in an amount of 0.5 to 4 parts by weight based on 100 parts by weight of the addition polymerization mixture. When the pH adjuster is added in the above-described weight parts range, it may be easy to adjust the pH to 6 to 9.

Meanwhile, the present disclosure relates to an acrylic emulsion resin composition having antiviral and antibacterial effects including a polymer of a monomer mixture including a vinyl monomer containing a quaternary ammonium salt group.

The acrylic emulsion resin composition may be prepared according to the above-described preparation method.

In addition, the monomer mixture including the vinyl monomer containing the quaternary ammonium salt group and a polymer thereof may be the same as those mentioned in the above-described preparation method.

An acrylic emulsion resin composition obtained by the preparation method of the present disclosure be used as a binder for various materials, and in particular, when used in a paint composition, properties of antiviral and antibacterial effects may be imparted. The acrylic emulsion resin composition of the present disclosure may be used to prepare the paint composition having antiviral and antibacterial effects, and the paint may be a water-based paint.

Hereinafter, the present disclosure will be described in more detail through specific examples. The following examples are merely examples to aid understanding of the present disclosure, and the scope of the present disclosure is not limited thereto.

### Mode for Invention

### Example

### 1. Preparation of acrylic emulsion resin composition

### Preparation Example 1

A nonionic surfactant (raw material A), a monomer mixture (raw material B), a radical polymerization initiator (raw material C), and a pH adjuster (raw material D) mixed in the amounts shown in Table 1 below were prepared.

**[Table 1]**

| Raw mate rial | Classificatio n | Contents | Mixing amount(g ) |
|---|---|---|---|
| A | Distilled water | Distilled water | 150 |
| | Nonionic surfactant | Polyoxyethylene nonylphenyl ether | 2 |
| B | Distilled water | Distilled water | 50 |
| | Nonionic surfactant | Polyoxyethylene nonylphenyl ether | 3 |
| | Vinyl monomer containing a quaternary ammonium salt group | [2-(methacryloyloxy)ethyl]trimethylammoniu m | 7 |
| | Acrylic acid ester-based monomer | Butyl acrylate | 23 |
| | Acrylic acid ester-based monomer | Methyl methacrylate | 20 |
| | Aromatic vinyl-based monomer | Styrene | 52 |
| | Organic acid-based monomer | Methacrylic acid | 5 |
| C | Distilled water | Distilled water | 30 |
| | Radical polymerizatio n initiator | Sodium persulfate | 1.3 |
| D | pH adjuster | Ammonia water (28%) | 2 |
| Sum (g) | | | 345.3 |

The raw material A shown in Table 1 was added to a 2L four-neck round bottom flask, and then connected to a nitrogen inlet tube, condenser, thermocouple, and dropping funnel, and heated to a temperature of 80°C under a nitrogen atmosphere. After heating, about 5 wt% of the raw material B was dropped while maintaining the temperature based on the weight of raw material B. Thereafter, the raw material C was added and the remainder of raw material B was dropped over 2 hours and maintained for 1 hour after the dropping was completed, and the raw material D was added and maintained for 30 minutes and then cooled to 35°C to obtain an acrylic emulsion resin composition.

### Preparation Example 2

An acrylic emulsion resin composition was obtained using the same method as in Preparation Example 1, except that the monomer mixture (raw material B) mixed in the amounts shown in Table 2 below was used.

**[Table 2]**

| Raw mate rial | Classificatio n | Contents | Mixing amount(g ) |
|---|---|---|---|
| A | Distilled water | Distilled water | 150 |
| | Nonionic surfactant | Polyoxyethylene nonylphenyl ether | 2 |
| B | Distilled water | Distilled water | 50 |
| | Nonionic surfactant | Polyoxyethylene nonylphenyl ether | 3 |
| | Vinyl monomer containing a quaternary | [3-(methacryloylamino)propyl]trimethylamm onium | 7 |
| | ammonium salt group | | |
| | Acrylic acid ester-based monomer | Butyl acrylate | 23 |
| | Acrylic acid ester-based monomer | Methyl methacrylate | 20 |
| | Aromatic vinyl-based monomer | Styrene | 52 |
| | Organic acid-based monomer | Methacrylic acid | 5 |
| C | Distilled water | Distilled water | 30 |
| | Radical polymerizatio n initiator | Sodium persulfate | 1.3 |
| D | pH adjuster | Ammonia water (28%) | 2 |
| Sum (g) | | | 345.3 |

### Preparation Example 3

An acrylic emulsion resin composition was obtained using the same method as in Preparation Example 1, except that the monomer mixture (raw material B) mixed in the amounts shown in Table 3 below was used.

**[Table 3]**

| Raw mate rial | Classificatio n | Contents | Mixing amount(g ) |
|---|---|---|---|
| A | Distilled water | Distilled water | 150 |
| | Nonionic surfactant | Polyoxyethylene nonylphenyl ether | 2 |
| B | Distilled water | Distilled water | 50 |
| | Nonionic surfactant | Polyoxyethylene nonylphenyl ether | 3 |
| | Vinyl monomer containing a quaternary ammonium salt group | ([2-(acryloyloxy)ethyl]trimethylammonium | 7 |
| | Acrylic acid ester-based monomer | Butyl acrylate | 23 |
| | Acrylic acid ester-based monomer | Methyl methacrylate | 20 |
| | Aromatic vinyl-based monomer | Styrene | 52 |
| | Organic acid-based monomer | Methacrylic acid | 5 |
| C | Distilled water | Distilled water | 30 |
| | Radical polymerizatio n initiator | Sodium persulfate | 1.3 |
| D | pH adjuster | Ammonia water(28%) | 2 |
| Sum (g) | | | 345.3 |

### Comparative Preparation Example 1

An acrylic emulsion resin composition was obtained using the same method as in Preparation Example 1, except that the monomer mixture (raw material B) mixed in the amounts shown in Table 4 below was used.

**[Table 4]**

| Raw mate rial | Classificatio n | Contents | Mixing amount(g ) |
|---|---|---|---|
| A | Distilled | Distilled water | 150 |
| | water | | |
| | Nonionic surfactant | Polyoxyethylene nonylphenyl ether | 2 |
| B | Distilled water | Distilled water | 50 |
| | Nonionic surfactant | Polyoxyethylene nonylphenyl ether | 3 |
| | Acrylic acid ester-based monomer | Butyl acrylate | 23 |
| | Acrylic acid ester-based monomer | Methyl methacrylate | 27 |
| | Aromatic vinyl-based monomer | Styrene | 52 |
| | Organic acid-based monomer | Methacrylic acid | 5 |
| C | Distilled water | Distilled water | 30 |
| | Radical polymerizatio n initiator | Sodium persulfate | 1.3 |
| D | pH adjuster | Ammonium water(28%) | 2 |
| Sum (g) | | | 345.3 |

### Comparative Preparation Example 2

An acrylic emulsion resin composition was obtained using the same method as in Preparation Example 1, except that the monomer mixture (raw material B) mixed in the amounts shown in Table 5 below was used.

**[Table 5]**

| Raw mate rial | classificatio n | Contents | Mixing amount(g ) |
|---|---|---|---|
| A | Distilled | Distilled water | 150 |
| | water | | |
| | Nonionic surfactant | Polyoxyethylene nonylphenyl ether | 2 |
| B | Distilled water | Distilled water | 50 |
| | Nonionic surfactant | Polyoxyethylene nonylphenyl ether | 3 |
| | Acrylic acid ester-based monomer | Butyl acrylate | 23 |
| | Acrylic acid ester-based monomer | Methyl methacrylate | 27 |
| | Aromatic vinyl-based monomer | Styrene | 57 |
| C | Distilled water | Distilled water | 30 |
| | Radical polymerizatio n initiator | Sodium persulfate | 1.3 |
| D | pH adjuster | Ammonium water (28%) | 2 |
| Sum (g) | | | 345.3 |

### 2. Preparation of a paint composition using an acrylic emulsion resin composition

A dispersant (TEGO Dispers 750W, Evonik, Germany), an antifoaming agent (TEGO Antifoam 793, Evonik, Germany), a film forming agent (Texanol, Eastman Chemical Company), a thickener (AkzoNobel's Bermocal EHM300), and distilled water were mixed with the acrylic emulsion resin compositions obtained in Preparation Examples 1 to 3 and Comparative Preparation Examples 1 and 2, to prepare a paint composition with the composition shown in Table 6 below.

**[Table 6]**

| Division | | Example 1 | Example 2 | Example 3 | Comparat ive Example 1 | Comparat ive Example 2 |
|---|---|---|---|---|---|---|
| Acrylic emulsion resin compositio n | Preparation Example 1 | 25 | - | - | - | - |
| | Preparation Example 2 | - | 25 | - | - | - |
| | Preparation Example 3 | - | - | 25 | - | - |
| | Comparative Prepara tion Example 1 | - | - | - | 25 | - |
| | Comparative Preparatio n Example 2 | - | - | - | - | 25 |
| Dispersant | | 0.5 | 0.5 | 0.5 | 0.5 | 0.5 |
| Antifoaming agent | | 0.7 | 0.7 | 0.7 | 0.7 | 0.7 |
| Film forming agent | | 3.2 | 3.2 | 3.2 | 3.2 | 3.2 |
| Thickener | | 0.6 | 0.6 | 0.6 | 0.6 | 0.6 |
| Distilled water | | 70 | 70 | 70 | 70 | 70 |
| Sum (g) | | 100 | 100 | 100 | 100 | 100 |

### 3. Evaluation of properties of a paint composition

Antiviral properties, antibacterial properties, water resistance, adhesion, rust prevention, and heat resistance were evaluated using the paint compositions of Examples 1 to 3 and Comparative Examples 1 and 2.

### (1) Antiviral properties (Coronavirus inactivation effect)

The paint compositions of Examples 1 to 3 and Comparative Examples 1 and 2 were coated to a thickness of about 2 µm on a steel sheet using a bar coater, and then a specimen was heated to reach a peak metal temperature (PMT) to 100°C in an induction heating device to cure a coating layer.

An experiment was performed according to the Modified ISO 21702 method using Feline coronavirus (FCoV) in a CRFK cell line. As test conditions, a reaction was conducted for 2 hours at a reaction temperature of 25 ± 1°C.

The antiviral effect was confirmed by an inactivation test for coronavirus using a tissue culture infectious dose (TCID) method. Since the 50% tissue culture infectious dose (TCID50) is a measure of infectious virus titer, by this endpoint dilution analysis, an amount of viruses required to kill 50% of infected hosts or produce a cytopathic effect (CPE) in 50% of inoculated cultured cells is quantified. By TCID50 analysis, a virus dilution factor in which a virus suspension diluted 10 times is inoculated into 5 or more animal cells (usually 8-10 test units) for each dilution factor, to infect 50% thereof, is expressed as a titer, and the TCID50 analysis is commonly used in clinical research to determine a lethal dose of the virus or for viruses that do not form plaques. A % ratio of wells, found to be infected by determining the presence or absence of CPE by observing a cell monolayer inoculated with the virus for each dilution factor of 10, was calculated and 50% of the endpoint was calculated using the Reed-Muench method. It took up to 7 days to establish infection in cell culture by the TCID50 analysis.

Evaluation: ⊚: Very good (reduction rate: 95% or more), ∘: Good (reduction rate: 90% or more and less than 95%), △: Somewhat poor (reduction rate: 80% or more and less than 90%), X: Very poor (reduction rate: less than 80%)

### (2) Antibacterial properties (E. coli killing effect)

The paint composition was spray painted twice on a steel specimen, dried for 1 day, and then tested on E. coli according to JIS Z 2801.

After inoculating 0.4cc of liquid bacteria on a 5mm * 5mm specimen, a sterilizing film (4mm x 4mm) was attached, and the specimen was placed in a constant temperature and humidity chamber at about 36°C for 24 hours, and then a degree of bacterial death was measured.

Evaluation: ⊚: Very good (reduction rate: 95% or more), ∘: Good (reduction rate: 90% or more and less than 95%), △: Somewhat poor (reduction rate: 80% or more and less than 90%), X: Very poor (reduction rate: less than 80%)

### (3) Water resistance

The paint composition was spray painted on a steel specimen twice and dried for 1 day, and then the specimen was immersed in fresh water to observe changes in a painting film.

Evaluation: ⊚: Very good (a painting film was not peeled off), ∘: Good (an area in which a painting film was peeled off: more than 0% and less than 10%), △: Somewhat poor (an area in which a painting film was peeled off: 10% or more and less than 20%), X: Very poor(an area in which a painting film was peeled off: 20% or more)

### (4) Adhesion

The above-described paint composition was spray painted on a steel specimen twice and dried for 1 day, and then a Cross Cut (100X100) tape test was performed to measure an area ratio remaining in a painting film.

Evaluation: ⊚: Very good (a painting film was not peeled off), ∘: Good (an area in which a painting film was peeled off: more than 0% and less than 5%), △: Somewhat poor (an area in which a painting film was peeled off: 5% or more and less than 10%), X: Very poor (an area in which a painting film was peeled off: 10% or more)

### (5) Rust prevention

The paint composition was spray painted twice on a steel specimen, dried for 1 day, and then subjected to a salt spray test.

Evaluation: ⊚: Very good (an area in which corrosion occurs: less than 5%), ∘: Good (an area in which corrosion occurs: more than 0% and less than 10%), △: Somewhat poor (an area in which corrosion occurs: 10% or more and less than 20%), X: Very poor (an area in which corrosion occurs: 20% or more).

### (6) Heat resistance

The paint composition was spray painted twice on a steel specimen, dried for 1 day, left at 80°C for 24 hours, and then a change in whiteness of the painted surface was measured.

Evaluation: Difference in Color ΔE is, ⊚: Very good (ΔE < 0.5), ∘: Good (0.5 ≤ ΔE < 1), △: Somewhat poor (1 ≤ ΔE < 2), X: Very poor (2≤ΔE)

As a result thereof, as shown in Table 7 below, in Examples 1 to 3, it was shown that water resistance, adhesion, rust prevention, and heat resistance were all excellent and antiviral and antibacterial properties were significantly superior to that of Comparative Examples 1 and 2.

**[Table 7]**

| Properties | Example 1 | Example 2 | Example 3 | Comparati ve Example 1 | Comparati ve Example 2 |
|---|---|---|---|---|---|
| Antiviral properties | ○ | ⊚ | ○ | X | X |
| Antibacteria l properties | ⊚ | ⊚ | ○ | X | X |
| Water resistance | ○ | ○ | ○ | ⊚ | ⊚ |
| Adhesion | ⊚ | ⊚ | ⊚ | ⊚ | ⊚ |
| Rust prevention | ○ | ○ | ○ | ⊚ | ⊚ |
| Heat resistance | ○ | ○ | ○ | ○ | ○ |

While example embodiments have been shown and described above, it will be apparent to those skilled in the art that modifications and variations could be made without departing from the scope of the present disclosure as defined by the appended claims.

## Claims

1. A method for preparing an acrylic emulsion resin composition having antiviral and antibacterial effects, comprising:
preparing a monomer mixture including a vinyl monomer containing a quaternary ammonium salt group;
preparing an addition polymerization mixture by mixing a nonionic surfactant and a radical polymerization initiator; and
an emulsion polymerization reaction operation of performing a polymerization reaction by mixing the monomer mixture with the prepared addition polymerization mixture.

2. The method for preparing an acrylic emulsion resin composition having antiviral and antibacterial effects of claim 1, wherein the vinyl monomer containing the quaternary ammonium salt group is at least one selected from the group consisting of [2-(methacryloyloxy)ethyl]trimethylammonium, [3-(methacryloylamino)propyl]trimethylammonium, and [2-(acryloyloxy)ethyl]trimethylammonium.

3. The method for preparing an acrylic emulsion resin composition having antiviral and antibacterial effects of claim 1, wherein the nonionic surfactant is at least one selected from the group consisting of polyoxyethylene nonylphenyl ether, polyoxyethylene octylphenyl ether, polyoxyethylene alkyl ether, polyoxyethylene alkyl ester, polyoxyethylene alkylamine ether, polyoxyethylene polyoxypropylene, polyethylene glycol, and sorbitan fatty acid ester.

4. The method for preparing an acrylic emulsion resin composition having antiviral and antibacterial effects of claim 1, wherein the radical polymerization initiator is at least one selected from the group consisting of ammonium persulfate, sodium persulfate, and potassium persulfate.

5. The method for preparing an acrylic emulsion resin composition having antiviral and antibacterial effects of claim 1, wherein the monomer mixture comprises 0.1 to 50% by weight of the vinyl monomer containing the quaternary ammonium salt group based on a total weight of the monomer mixture.

6. The method for preparing an acrylic emulsion resin composition having antiviral and antibacterial effects of claim 1, wherein the monomer mixture further comprises at least one selected from the group consisting of acrylic acid ester-based monomer, aromatic vinyl-based monomer, and organic acid-based monomer.

7. The method for preparing an acrylic emulsion resin composition having antiviral and antibacterial effects of claim 6, wherein the acrylic acid ester-based monomer is at least one selected from the group consisting of methyl methacrylate, methyl acrylate, ethyl (meth)acrylate, ethyl acrylate, butyl acrylate, butyl (meth)acrylate, 2-ethylhexyl (meth)acrylate, 2-ethylhexyl acrylate, benzyl(meth)acrylate, benzyl acrylate, lauryl(meth)acrylate, lauryl acrylate, oleyl(meth)acrylate, palmityl(meth)acrylate), and stearyl(meth)acrylate.

8. The method for preparing an acrylic emulsion resin composition having antiviral and antibacterial effects of claim 6, wherein the aromatic vinyl-based monomer is at least one selected from the group consisting of styrene, α-methylstyrene, trans-β-methylstyrene, β-methylstyrene, and 4-methylstyrene.

9. The method for preparing an acrylic emulsion resin composition having antiviral and antibacterial effects of claim 6, wherein the organic acid-based monomer is at least one selected from the group consisting of acrylic acid, methacrylic acid, fumaric acid, maleic acid, and itaconic acid.

10. The method for preparing an acrylic emulsion resin composition having antiviral and antibacterial effects of claim 1, wherein the operation of preparing the addition polymerization mixture is performed by additionally mixing at least a portion of the monomer mixture.

11. The method for preparing an acrylic emulsion resin composition having antiviral and antibacterial effects of claim 1, wherein the addition polymerization mixture is prepared by mixing 1 to 20 parts by weight of a nonionic surfactant and 0.1 to 3 parts by weight of a radical polymerization initiator based on 100 parts by weight of the monomer mixture.

12. The method for preparing an acrylic emulsion resin composition having antiviral and antibacterial effects of claim 1, wherein the emulsion polymerization reaction operation is performed by dropping the monomer mixture into the addition polymerization mixture.

13. The method for preparing an acrylic emulsion resin composition having antiviral and antibacterial effects of claim 1, further comprising:
a pH adjustment operation of adding a pH adjuster to a result obtained from the emulsion polymerization reaction operation.

14. The method for preparing an acrylic emulsion resin composition having antiviral and antibacterial effects of claim 13, wherein in the pH adjustment operation, pH of the result obtained from the emulsion polymerization reaction operation is adjusted to 6 to 9.

15. The method for preparing an acrylic emulsion resin composition having antiviral and antibacterial effects of claim 13, wherein the pH adjuster is added in an amount of 0.5 to 4 parts by weight based on 100 parts by weight of the addition polymerization mixture.

16. The method for preparing an acrylic emulsion resin composition having antiviral and antibacterial effects of claim 13, wherein the pH adjuster is at least one selected from the group consisting of ammonia water, monoethanolamine, diethanolamine, triethanolamine, 1-amino-2-methylpropane, 2-amino-2-methylpropane, and triethylamine.

17. An acrylic emulsion resin composition having antiviral and antibacterial effects comprising:
a polymer of a monomer mixture including a vinyl monomer containing a quaternary ammonium salt group.
